# EUROPÄISCHE PATENTSCHRIFT

(11) **EP 1 157 900 B1**
(45) Veröffentlichungstag und Bekanntmachung des Hinweises auf die Patenterteilung: **06.04.2005**
(21) Anmeldenummer: 01109240.0
(22) Anmeldetag: 14.04.2001
(51) Int. Cl.: B60R 21/16

(54) **Kopfschutzeinrichtung für Insassen von Kraftfahrzeugen**
Head-protecting device for motor vehicle occupants
Dispositif pour la protection de la tête d'un occupant de véhicule automobile

(30) Priorität: 25.05.2000 DE 10026026
(43) Veröffentlichungstag der Anmeldung: 28.11.2001
(73) Patentinhaber: Bayerische Motoren Werke Aktiengesellschaft, 80809 München (DE)
(72) Erfinder: Meister, Markus, 81245 München (DE); Schaper, Jens, Dr., 80135 München (DE); Hardtmann, Dirk, 80995 München (DE); Taubenberger, Josef, 83052 Bruckmühl (DE); Sertl, Hans-Peter, 98378 Kemnath (DE); Bürkle, Jörg, 85354 Freising (DE); Diepold, Gisela, 82205 Gilching (DE)

(56) Entgegenhaltungen:
- EP-A- 0 592 815
- DE-A- 19 538 657
- US-A- 6 062 594

## Beschreibung

Die Erfindung bezieht sich auf eine Kopfschutzeinrichtung für Insassen von Kraftfahrzeugen, wie sie im Oberbegriff des Hauptanspruchs beschrieben ist.

Aus der EP 0 592 815 B1 ist eine derartige Kopfschutzeinrichtung bekannt. Ein Luftsack ist am oberen Abschnitt eines als Diagonalgurt ausgelegten Sicherheitsgurtes angeordnet und mit dem einen Ende an der B-Säule der Fahrzeugkarosserie befestigt. In diesem Bereich befindet sich auch der Gasgenerator für das Befüllen des Luftsacks. Der Luftsack ist in seinem Zuschnitt so aufgeführt, dass er beim Aufblasen eine V-Form ausbildet. Dabei zeigen die aufeinander zulaufenden V-Schenkel auf den Halsbereich des Fahrzeuginsassen.

Um seine Schutzwirkung zu erzielen, muss die vorbekannte Kopfschutzeinrichtung sehr schnell aufgeblasen werden, das heißt, der Gassack muss mit hohem Druck befüllt werden. Nur so ist sichergestellt, dass der Kopf des Fahrzeuginsassen schon zu Beginn seiner Verlagerung bei einem Seitenaufprall von dem dann schon aufgeblasenem Luftsack abgestützt wird. Ein derartig schnelles Befüllen des Gassackes wird auch mit "Aggressivität" des Systems umschrieben.

Aufgabe der Erfindung ist es, eine gattungsgemäße Kopfschutzeinrichtung so weiterzubilden, dass sie eine geringere Aggressivität zeigt und sich darüber hinaus universell, das heißt beispielsweise auch bei offenen Fahrzeugen, also Cabrios einsetzen lässt.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist demnach der Luftsack in mehrere Kammern aufgeteilt, die untereinander verbunden sind, so dass das vom Gasgenerator erzeugte Gas von der einen Kammer in die andere fließen kann. Durch ihre Auslegung verleihen die Kammern dem Gassack eine L-Form mit einer unteren Kammer, die sich ähnlich dem waagrecht verlaufenden L-Schenkel entlang der Schulter des Fahrzeuginsassens erstreckt. Daran schließt sich entsprechend dem senkrechten L-Schenkel eine zweite aufrechte Kammer an, die entlang des Hals- und Kopfbereichs des Fahrzeuginsassen nach oben verläuft.

Diese Anordnung erlaubt es, zunächst die aufrechte Kammer zu befüllen. Dadurch findet der Kopf des Insassens schon zu Beginn seiner Verlagerung einen gewissen Halt an diesem Luftsackabschnitt und schützt ihn darüber hinaus vor eindringenden Karosserieteilen. Das Gas strömt von der oberen Kammer in die untere Kammer, die sich ebenfalls füllt. So kann sich bei einer weiteren Verlagerung des Kopfes die obere Kammer gegen die schließlich gefüllte untere Kammer abstützen, so dass insgesamt der Kopf des Fahrzeuginsassen sicher gehalten wird. Durch die dadurch erhaltene längere Befüllzeit zeigt sich das System weniger aggressiv.

Die Erfindung eignet sich in besonderer Weise für offene Fahrzeuge, also Cabrio-Fahrzeuge. Bei diesen Fahrzeugtypen sind keine Karosserieabschnitte in Form von B- oder C-Säulen vorhanden. Die Festlegung der erfindungsgemäßen Kopfschutzeinrichtung erfolgt in solchen Fällen im Bereich der Rücklehnenoberkante des Fahrzeugsitzes. Der Gasgenerator selbst kann bevorzugt in der Rückenlehne oder Kopfstütze untergebracht sein. Soweit diese Sitze mit einem sogenannten integrierten Gurtsystem ausgestattet sind - alle Gurtverankerungspunkte sind im oder am Sitz vorgesehen - ist es zweckmäßig, den Luftsack am Gurtband zu verankern. Dies kann in einfacher Weise durch eine Schlaufe an der Aussenseite des Luftsacks erfolgen, durch die das Gurtband hindurch geführt ist.

Weitere vorteilhafte Ausgestaltungen der Erfindung ergeben sich aus der nachfolgenden Beschreibung anhand der dazugehörenden Zeichnung. Es zeigen
- Figur 1: in schematischer Darstellung, den Oberkörper eines Fahrzeuginsassen mit einem seitlichen, aufgeblasenen Luftsack nach der Erfindung,
- Figur 2: in verkleinertem Maßstab eine schematische Seitenansicht eines Fahrzeugsitzes mit einer nicht aktivierten Kopfschutzeinrichtung und
- Figur 3: eine Vorderansicht des Fahrzeugsitzes nach Fig. 2.

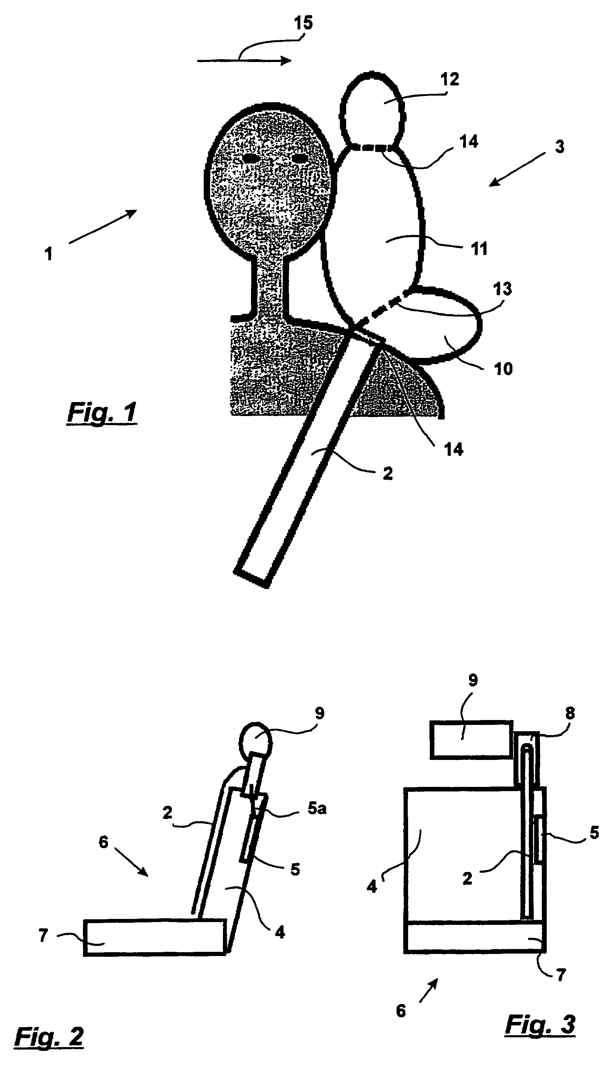

Bei der in Figur 1 schematisch dargestellten Person handelt es sich um den Insassen 1 eines Kraftfahrzeuges. Es sind Schulter- und Kopfbereich erkennbar, sowie ein diagonal über den Brustbereich verlaufendes Gurtband 2 eines nicht weiter dargestellten Dreipunkt-Sicherheitsgurtes. Ein insgesamt mit 3 bezeichneter Luftsack ist Teil einer Kopfschutzeinrichtung, die im wesentlichen aus diesem Luftsack 3, einem in einer Rücklehne 4 (Figuren 2 und 3) angeordneten Gasgenerator 5 und einer Zuleitung 5a zwischen dem Gasgenerator 5 und dem Luftsack 3 besteht. Der Gasgenerator kann ebensogut in der Kopfstütze, soweit dort noch Platz ist, untergebracht sein. Schließlich ist auch ein karosserieseitiger Anbringungsort, z. B. im Bereich der B-Säule bei einer vorgegebenen Karosserieform angebracht.

Die Rückenlehne 4 gehört zu einem Fahrzeugsitz 6, auf dem der Insassen 1 nach Figur 1 Platz nimmt und der mit einem integrierten Sicherheitsgurtsystem ausgerüstet ist. Bei diesem Gurtsystem läuft nach Figur 3 das Gurtband 2 von einem unteren, im Bereich eines Sitzkissens 7 vorgesehenen Verankerungspunkt nach oben zu einer Umlenkvorrichtung und von dort - nicht erkennbar - in der Rücklehne zurück zu einem Gurtaufroller. Eine ebenfalls nicht erkennbare Schlosszunge, durch die das Gurtband 2 hindurchgeschleift ist, läßt sich in einem nicht gezeichneten Gurtschloß auf der gegenüberliegenden Seite des Sitzkissens verankern. Die Umlenkvorrichtung ist in einem verschiebbaren Träger 8 vorgesehen, der eine höhenverstellbare Kopfstütze 9 hält. Am Träger 8 ist außerdem die Kopfschutzeinrichtung gehalten.

Nach Fig. 1 ist der Luftsack 3 aufgeblasen. Er bildet in diesem Zustand drei Kammern 10, 11, 12 aus und zeigt in etwa eine L-Form. Eine erste Kammer 10 gibt sozusagen den waagrechten, unteren L-Schenkel wider und sie erstreckt sich entsprechend entlang der Schulter des Fahrzeuginsassen 1. An diese Kammer 10 schließt sich nach oben eine - dem senkrechten L-Schenkel entsprechend - aufrechte Kammer 11 an, die in eine kleine Kammer 12 übergeht. Diese beiden Kammern erstrecken sich vom Hals- zum Kopfbereich des Insassen 1. Die einzelnen Kammern sind unter Verwendung von Nähten 13, 14 gebildet, die gegenüberliegende Wandbereiche des Luftsacks 3 so miteinander verbinden, dass Gas von der einen Kammer in die andere fließen kann. Schließlich läuft das Gurtband 2 durch eine an der Außenseite der Kammer 10 angebrachten Schleife 14.

Wird durch einen nicht näher dargestellten Sensor ein Seitenaufprall erkannt, zündet der Gasgenerator 5 und über die Leitung 5a (Fig. 2) strömt Gas in die Kammer 11. Sie wird zunächst alleine aufgeblasen und erst allmählich füllen sich auch die Kammern 10 und 12. Durch den Aufprall wird der Kopf des Insassen 1 in Pfeilrichtung 15 verlagert und er findet durch die schon früh aufgeblasene Kammer 11 eine erste Abstützung. Soweit Teile des Fahrzeugaufbaus in den Fahrgastraum in diesem Bereich eindringen, schützt die Kammer 11 darüber hinaus den Kopf vor diesen Teilen. Bei ansteigenden Verlagerungskräften stützt sich die die Kammer 11 zunehmend an der Kammer 10 ab.

## Patentansprüche

1. Kopfschutzeinrichtung für Insassen von Kraftfahrzeugen, mit einem aufblasbarem Luftsack, den im Bedarfsfall ein Gasgenerator füllt und der sich im aufgeblasenen Zustand seitlich zwischen Schulter und Kopf des Fahrzeuginsassen erstreckt, **dadurch gekennzeichnet, dass** der Luftsack (3) durch Nähte (13, 14), die einzelne Wandbereiche des Luftsacks (3) zueinander festlegen, als Mehrkammer-Luftsack ausgelegt ist mit untereinander verbundenen Teilkammem (10, 11, 12), dass die Kammern (10, 11, 12) dem Luftsack (3) im aufgeblasenen Zustand annähernd eine L-Form verleihen mit einer unteren, liegenden Kammer (10), die sich in etwa waagrecht entlang der Schulter des Fahrzeuginsassen (1) erstreckt, und wenigstens einer dazu aufrechten, nach oben entlang dem Hals- und Kopfbereich verlaufenden weiteren Kammer (11, 12), dass das Gas zum Aufblasen des Luftsacks (3) in die aufrechte Kammer (11) eingespeist wird und dass sich die Kammern (10, 11) im aufgeblasen Zustand aneinander abstützen.

2. Kopfschutzeinrichtung nach Anspruch 1, **dadurch gekennzeichnet, dass** die aufrechte Kammer in mehrere Teilkammern (11, 12) unterteilt ist.

3. Kopfschutzeinrichtung nach Anspruch 1 oder 2 für ein Kraftfahrzeug mit einem diagonal über den Brustbereich des Fahrzeuginsassen verlaufenden, sitzintegrierten Sicherheitsgurt, **dadurch gekennzeichnet, dass** die Kopfschutzeinrichtung im Bereich der Oberkante einer Sitzlehne (4) angeordnet ist und dass das Gurtband (2) durch eine an der Außenwand der Luftsacks (3) angebrachten Schlaufe (14) hindurchgeführt ist.

4. Kopfschutzeinrichtung nach Anspruch 3, **dadurch gekennzeichnet, dass** ein Gasgenerator (5) für das Befüllen des Luftsacks (3) innerhalb der Rückenlehne (4) des Fahrzeugsitzes (6) oder der Kopfstütze untergebracht ist.

5. Kopfschutzeinrichtung nach Anspruch 3, **dadurch gekennzeichnet, dass** ein Gasgenerator karosserieseitig in der B-Säule untergebracht ist.

## Claims

1. A head-protecting device for occupants of motor vehicles, comprising an inflatable airbag which in emergency is filled by a gas generator and when inflated extends laterally between the occupant's shoulder and head, **characterised in that** the airbag (3) is in the form of a number of interconnected part-chambers (10, 11, 12) with seams (13, 14) defining the individual wall regions of the airbag (3) relative to one another, the chambers (10, 11, 12) give the airbag (3) an approximately L-shape when inflated, with a bottom horizontal chamber (10) extending approximately horizontally along the occupant's (1) shoulder and at least one additional chamber (11, 12) at right angles thereto and extending upwards along the neck and head region, the gas for inflating the airbag (3) is fed into the upright chamber (11) and the chambers (10, 11) abut one another when inflated.

2. A head-protecting device according to claim 1, **characterised in that** the upright chamber is divided into a number of part-chambers (11, 12).

3. A head-protecting device according to claim 1 or 2 for a motor vehicle comprising a safety belt incorporated in the seat and extending over the occupant's chest region, **characterised in that** the head-protecting device is disposed in the neighbourhood of the top edge of a seat rest (4) and the belt strap (2) is run through a loop (14) attached to the outer wall of the airbag (3).

4. A head-protecting device according to claim 3, **characterised in that** a gas generator (5) for filling the airbag (3) is incorporated in the head rest or in the back rest (4) of the vehicle seat (6).

5. A head-protecting device according to claim 3, **characterised in that** a gas generator is received in the B-column on the vehicle body side.

## Revendications

1. Dispositif de protection de la tête d'un occupant d'un véhicule automobile comprenant un sac à air gonflable que remplit en cas de besoin un générateur de gaz et qui, à l'état gonflé, s'étend latéralement entre les épaules et la tête de l'occupant,
**caractérisé en ce que**
le sac à air (3) est constitué, en tant que sac à plusieurs chambres réalisées au moyen de coutures (13, 14) qui fixent l'une à l'autre les diverses zones de la paroi du sac (3) en créant des chambres partielles (10, 11, 12) reliées entre elles qui donnent au sac à l'état gonflé à peu près la forme d'un L, avec une chambre (10) située en bas et s'étendant à peu près horizontalement le long des épaules de l'occupant (1) du véhicule et au moins une autre chambre (11, 12) verticale et s'étendant vers le haut le long de la zone du cou et de la tête, le gaz de gonflage du sac (3) étant introduit dans la chambre verticale (11), et à l'état gonflé, les chambres (10, 11) s'appuie l'une sur l'autre.

2. Dispositif de protection de la tête selon la revendication 1,
**caractérisé en ce que**
la chambre verticale est divisée en plusieurs chambres partielles (11, 12).

3. Dispositif de protection de la tête selon la revendication 1 ou 2, pour un véhicule équipé d'une ceinture de sécurité intégrée, passant en diagonale sur la zone de poitrine de l'occupant,
**caractérisé en ce que**
le dispositif de protection de tête est monté dans la zone du bord supérieur d'un dossier de siège (4) et que la bande de ceinture (2) passe à travers une boucle (14) montée sur la paroi externe du sac à air (3).

4. Dispositif de protection de la tête selon la revendication 3,
**caractérisé en ce qu'**
un générateur de gaz (5) destiné à remplir le sac à air (3) est monté à l'intérieur du dossier (4) du siège du véhicule (6) ou dans l'appui-tête.

5. Dispositif de protection de la tête selon la revendication 3,
**caractérisé en ce qu'**
un générateur de gaz est monté du côté de la carrosserie dans la colonne B.
